# EUROPEAN PATENT APPLICATION

(11) **EP 4 156 042 A1**
(43) Date of publication of application: **29.03.2023**
(21) Application number: 20936587.3
(22) Date of filing: 21.05.2020
(51) Int. Cl.: G06Q 10/00, G06Q 10/06

(54) **WORK ALLOCATION DEVICE**

(71) Applicant: MITSUBISHI ELECTRIC CORPORATION, Chiyoda-ku Tokyo 100-8310 (JP)
(72) Inventor: YAMAMOTO Nami, Tokyo 100-8310 (JP); IWATA Masafumi, Tokyo 100-8310 (JP); YOSHINAGA Mitsunobu, Tokyo 100-8310 (JP); NARUSE Mami, Tokyo 100-8310 (JP)
(74) Representative: Mewburn Ellis LLP
(86) International application number: PCT/JP2020/020084
(87) International publication number: WO 2021/234898

(57) **Abstract**

An assignment of an operator in accordance with the condition of a plant is dynamically performed. A work assignment device includes a work procedure derivation unit, a scheduling unit, a work assignment evaluation unit, and a work assignment determination unit. The work procedure derivation unit derives a work procedure on the basis of plant information on the plant. The scheduling unit selects a plurality of work assignment candidates each indicating an assignment of an operator to a procedure which is a constituent of the work procedure. The work assignment evaluation unit performs evaluation on each of the plurality of work assignment candidates. The work assignment determination unit determines a work assignment from the plurality of work assignment candidates on the basis of a result of the evaluation.

## Description

### Technical Field

The present disclosure relates to a work assignment device.

### Background Art

In many cases, a large-scale plant such as a plant belonging to an electric power field or the like is monitored and controlled by a supervisory control device.

In recent years, in the supervisory control device, a software-type digital supervisory control panel has been introduced, instead of a conventional hardware-type analog supervisory control panel. The software-type digital supervisory control panel is also referred to as a digital panel.

In a case where the digital panel is introduced into the supervisory control device, a work is performed by using a graphical operator interface (GUI) which integrates functions of the supervisory control panel. By introducing the digital panel into the supervisory control device, the size of the supervisory control device can be reduced, and an operation load to be imposed on an operator (operating person) in operating the supervisory control panel can be thereby reduced.

In operating the plant, a work procedure to be performed when an event occurs and a work assignment designating an operator in charge who (which) performs a work which is a constituent of the work procedure are determined in advance. In some cases, the operator in charge is an operating person, and in other cases, the operator in charge is an automated system. In recent years, however, due to higher functionality of a supervisory control system and reduction in the number of operators which is accordingly caused, assumed is management in which in a normal operation, a minimum number of operators monitors a plurality of plants at the same time, and in occurrence of an event, the number of operators and a work system should be changed.

Further, when an operator hands over a work to another operator or the automated system hands over a work to an operator, the operator who takes over the work should correctly recognize an implementation status of the work so far and a work assignment from then. For this reason, it is important that the work assignment of the operator should be presented in consideration of conditions of the operator such as a workload imposed on the operator, condition recognition by the operator, and the like.

In the technique disclosed in Patent Document 1, when detection notification of abnormality is received, an operator who is to deal with this abnormality is determined. Further, a new assignment of works is made for an operator who was engaged in an impossible work which became impossible to proceed, due to occurrence of the abnormality.

In the technique disclosed in Patent Document 2, fatigue of a user is detected by using biometric information of the user and information on the work of the user. Further, support measures required to reduce the fatigue is selected in accordance with the detected fatigue state of the user. The support measures are user interface controls including enlarged display and/or enhancement of a contrast in a screen of a display device, an increase in the volume of voice and sound, an increase in the input sensitivity of an input device such as a mouse, a pen tablet, or the like, and so on.

### Prior Art Documents

### Patent Documents

[Patent Document 1] WO 2017/163629
[Patent Document 2] Japanese Patent Application Laid Open Gazette No. 2001-184139

### Summary

### Problem to be Solved by the Invention

As described above, in the case where the work assignment designating the work procedure and the operator in charge is determined in advance and an operator is assigned to a work in accordance with the work assignment determined in advance, a rule for assigning the work has to be prepared in advance. Further, when an unexpected combination of events occur, there are some cases where it is impossible to deal with the occurring events at the right time by using the work assignment determined in advance and this causes a severe accident. For this reason, it is required to dynamically perform the work assignment.

The present disclosure is intended to solve this problem. It is an object of the present disclosure to provide a work assignment device capable of dynamically performing an assignment of an operator in accordance with a plant condition.

### Means to Solve the Problem

The present disclosure is intended for a work assignment device.

The work assignment device includes a work procedure derivation unit, a scheduling unit, a work assignment evaluation unit, and a work assignment determination unit.

The work procedure derivation unit derives a work procedure on the basis of plant information on a plant.

The scheduling unit selects a plurality of work assignment candidates each indicating an assignment of an operator to a procedure which is a constituent of the work procedure.

The work assignment evaluation unit performs evaluation on each of the plurality of work assignment candidates.

The work assignment determination unit determines a work assignment from the plurality of work assignment candidates on the basis of a result of the evaluation.

### Effects of the Invention

According to the present disclosure, a work procedure is derived on the basis of plant information on a plant, and an assignment of an operator to a procedure which is a constituent of the derived work procedure is determined. It is thereby possible to dynamically perform an assignment of an operator in accordance with a plant condition.

These and other objects, features, aspects and advantages of the present disclosure will become more apparent from the following detailed description of the present disclosure when taken in conjunction with the accompanying drawings.

### Brief Description of Drawings

Fig. 1 is a block diagram schematically showing a hardware configuration of a supervisory control system on which a work assignment device in accordance with a first preferred embodiment is mounted;
Fig. 2 is a block diagram schematically showing a functional configuration of the work assignment device in accordance with the first preferred embodiment;
Fig. 3 is a view showing an example of event information stored in the work assignment device in accordance with the first preferred embodiment;
Fig. 4 is a view showing an example of work procedure information stored in the work assignment device in accordance with the first preferred embodiment;
Fig. 5 is a view showing another example of work procedure information stored in the work assignment device in accordance with the first preferred embodiment;
Fig. 6 is a view showing an example of operator information stored in the work assignment device in accordance with the first preferred embodiment;
Fig. 7 is a view showing an example of evaluation information stored in the work assignment device in accordance with the first preferred embodiment;
Fig. 8 is a view showing an example of presentation information stored in the work assignment device in accordance with the first preferred embodiment;
Fig. 9 is a flowchart showing a processing performed by the work assignment device in accordance with the first preferred embodiment;
Fig. 10 is a view showing an exemplary selection of a plurality of work assignment candidates, which is performed by the work assignment device in accordance with the first preferred embodiment;
Fig. 11 is a view showing a result of the selection of the plurality of work assignment candidates, which is performed by the work assignment device in accordance with the first preferred embodiment;
Fig. 12 is a view showing an exemplary judgment of a degree of fatigue of an operator on the basis of a required operation time, which is performed by the work assignment device in accordance with the first preferred embodiment;
Fig. 13 is a flowchart showing an exemplary process for evaluation, which is performed by the work assignment device in accordance with the first preferred embodiment;
Fig. 14 is a view showing exemplary evaluation performed by the work assignment device in accordance with the first preferred embodiment;
Fig. 15 is a flowchart showing an exemplary process of determining a presentation method, which is performed by the work assignment device in accordance with the first preferred embodiment;
Fig. 16 is a view showing exemplary determination of the presentation method, which is performed by the work assignment device in accordance with the first preferred embodiment; and
Fig. 17 is a view showing a work content that should be performed next by the operator, which is displayed on an operation screen of a plant operated by the operator, by the work assignment device in accordance with the first preferred embodiment.

### Description of Embodiment(s)

### 1 The First Preferred Embodiment

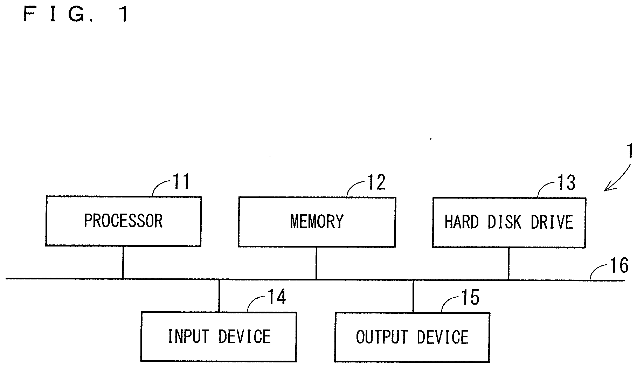

Fig. 1 is a block diagram schematically showing a hardware configuration of a supervisory control system on which a work assignment device in accordance with a first preferred embodiment is mounted.

The supervisory control system 1 shown in Fig. 1 monitors and controls a plant. The supervisory control system 1 is formed of a computer.

As shown in Fig. 1, the supervisory control system 1 includes a processor 11, a memory 12, a hard disk drive 13, an input device 14, an output device 15, and a system bus 16.

The processor 11 is a central processing unit (CPU), a graphics processing unit (GPU), a digital signal processor (DSP), or the like. The memory 12 is a random access memory (RAM), a read Only memory (ROM), or the like. The hard disk drive 13 may be replaced with an auxiliary storage other than the hard disk drive 13. For example, the hard disk drive 13 may be replaced with a solid state drive (SSD), a RAM disk, or the like. The input device 14 is a keyboard, a pointing device, a microphone, a scanner, a camera, a communication interface, a sensor, or the like. The output device 15 is a display, a lamp, a speaker, a communication interface, or the like.

The system bus 16 communicably connects the processor 11, the memory 12, the hard disk drive 13, the input device 14, and the output device 15 to one another.

### 2 Work Assignment Device

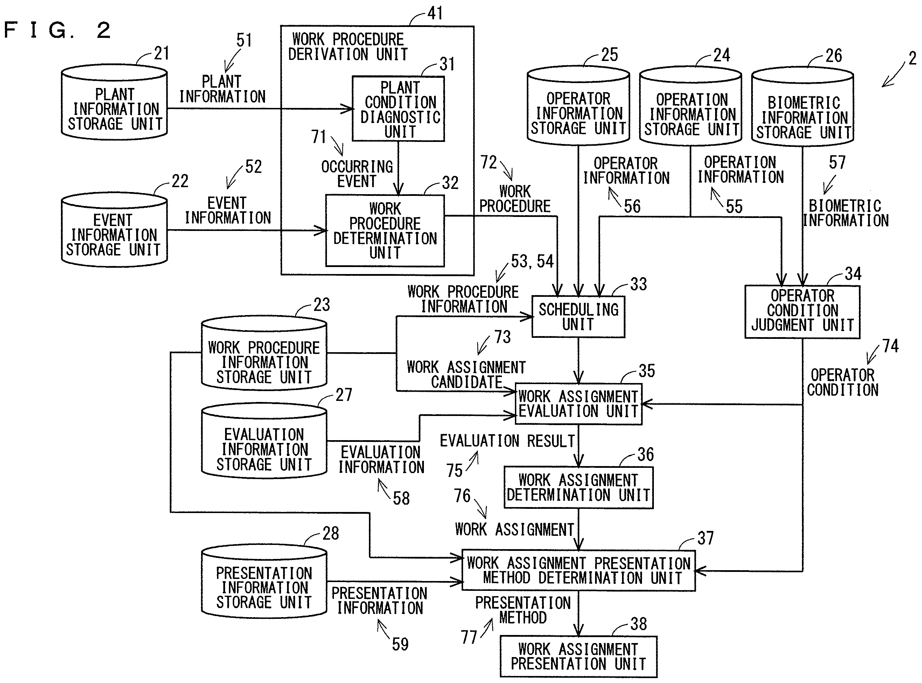

Fig. 2 is a block diagram schematically showing a functional configuration of the work assignment device in accordance with the first preferred embodiment.

As shown in Fig. 2, the work assignment device 2 of the first preferred embodiment includes a plant information storage unit 21, an event information storage unit 22, a work procedure information storage unit 23, an operation information storage unit 24, an operator information storage unit 25, a biometric information storage unit 26, an evaluation information storage unit 27, and a presentation information storage unit 28. These constituent elements are each formed of at least one of the memory 12 and the hard disk drive 13.

Further, as shown in Fig. 2, the work assignment device 2 includes a plant condition diagnostic unit 31, a work procedure determination unit 32, a scheduling unit 33, an operator condition judgment unit 34, a work assignment evaluation unit 35, a work assignment determination unit 36, a work assignment presentation method determination unit 37, and a work assignment presentation unit 38. Respective functions of these constituent elements are each implemented by executing a program stored in at least one of the memory 12 and the hard disk drive 13. There may be a configuration where the supervisory control system 1 includes a plurality of processors 11, a plurality of memories 12, and a plurality of hard disk drives 13 and the plurality of processors 11, the plurality of memories 12, and the plurality of hard disk drives 13 cooperate to implement the respective functions of these constituent elements.

### 3 Information to be Stored

### 3.1 Plant Information

The plant information storage unit 21 stores therein plant information 51. The plant information 51 to be stored there is information on a plant. The plant information 51 is time series information. The plant information 51 is acquired by a plant equipment which is a constituent of the plant. The plant information 51 includes at least one kind of information selected from a group consisting of alarm information on an alarm to be set off by the plant equipment and a plant value outputted from the plant equipment. Hereinafter, it is assumed that the plant information 51 includes both the alarm information and the plant value. The plant information 51 may include any information other than the alarm information or the plant value. The plant information 51 may include, for example, information on an operation state of the plant other than the alarm information, instead of the alarm information or in addition to the alarm information. The plant equipment is an equipment in accordance with the kind of plant, such as a motor, a pump, a valve, or the like.

### 3. 2 Event Information

The event information storage unit 22 stores therein event information 52. The event information 52 to be stored there is information on an event that occurs in the plant.

The event information 52 indicates a work procedure to be performed when each event occurs and a degree of influence of the event. The event information 52 may indicate information other than these kinds of information. For example, the event information 52 may indicate work priority or the like of the work procedure to be performed when each event occurs.

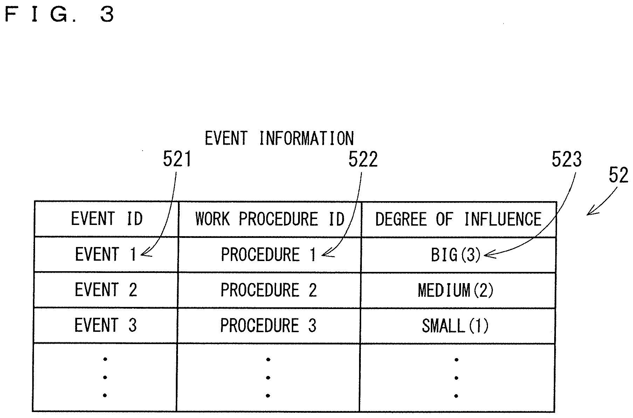

Fig. 3 is a view showing an example of the event information stored in the work assignment device in accordance with the first preferred embodiment.

The event information 52 shown in Fig. 3 includes an event ID 521, and a work procedure ID 522 and a degree of influence 523 which are corresponding to the event ID 521. The event ID 521 specifies an event. The work procedure ID 522 corresponding to the event ID 521 specifies a work procedure to be performed when the event specified by the event ID 521 occurs. The degree of influence 523 corresponding to the event ID 521 specifies a degree of influence of the event specified by the event ID 521. The event information 52 shown in Fig. 3 thereby indicates the work procedure to be performed when each event occurs and the degree of influence of the event. The degree of influence 523 is represented as "big", "medium", or "small". To the degree of influence 523 of "big", "medium", or "small", given is a coefficient of "3", "2", or "1", respectively, by which an error rate described later is multiplied.

Hereinafter, for simple description, events specified by the event IDs 521 of "event 1", "event 2", and "event 3" will be abbreviated as "event 1", "event 2", and "event 3", respectively. Further, work procedures specified by the work procedure IDs 522 of "procedure 1", "procedure 2", and "procedure 3" will be abbreviated as "procedure 1", "procedure 2", and "procedure 3", respectively.

### 3. 3 Work Procedure Information

The work procedure information storage unit 23 stores therein work procedure information 53 and work procedure information 54. The work procedure information 53 and the work procedure information 54 to be stored there are each information on each procedure.

The work procedure information 53 indicates a procedure which is a constituent of each work procedure. The work procedure information 53 indicates whether or not each of a human and a system can perform each procedure and whether or not each procedure needs a performance qualification. Further, the work procedure information 53 indicates a standard error rate of an error occurring when each procedure is performed and an allowed time which is time allowed to spend until each procedure is performed. The work procedure information 53 may indicate information other than these kinds of information. For example, the work procedure information 53 may indicate a standard work time which is standardly spent when each procedure is performed, a workload to be imposed on an operator performing each procedure when the procedure is performed, a cost incurred when each procedure is performed, or the like.

The work procedure information 54 indicates a work which is a constituent of each procedure. Further, the work procedure information 54 indicates a workload to be imposed on an operator performing each work when the work is performed and an error rate of an error occurring when each work is performed.

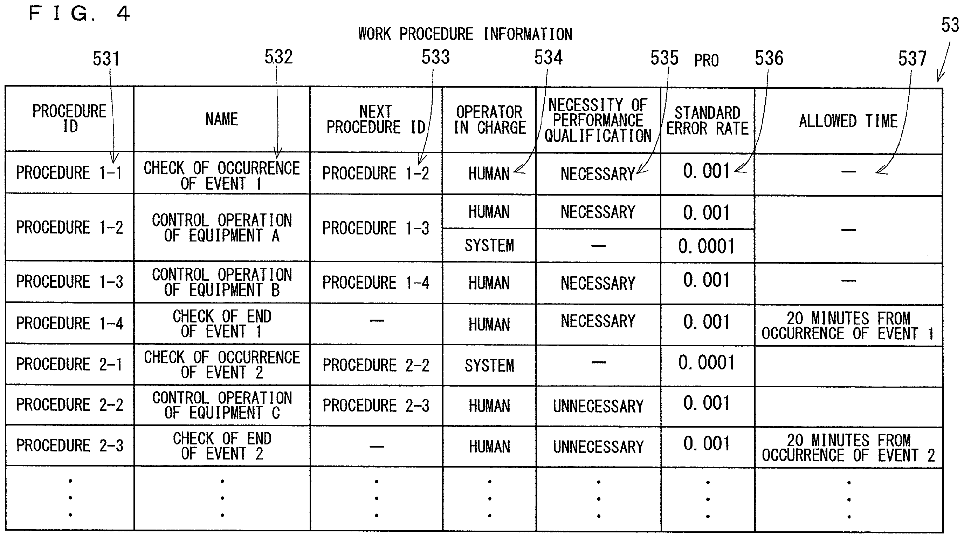

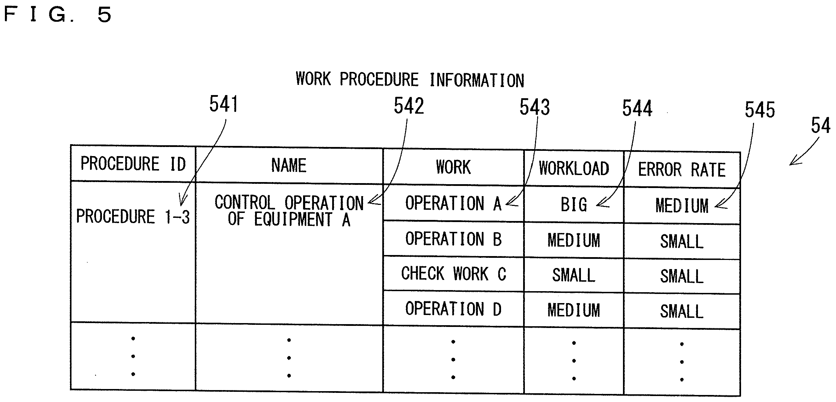

Figs. 4 and 5 are views showing examples of the work procedure information stored in the work assignment device in accordance with the first preferred embodiment.

The work procedure information 53 shown in Fig. 4 includes a procedure ID 531, and a name 532, a next procedure ID 533, an operator in charge 534, the necessity of performance qualification 535, a standard error rate 536, and an allowed time 537 which are corresponding to the procedure ID 531. The procedure ID 531 specifies a procedure. The name 532 corresponding to the procedure ID 531 specifies a name of the procedure specified by the procedure ID 531. The next procedure ID 533 corresponding to the procedure ID 531 specifies a next procedure to be performed next to the procedure specified by the procedure ID 531. The operator in charge 534 corresponding to the procedure ID 531 specifies an operator in charge who (which) can perform the procedure specified by the procedure ID 531. The operator in charge is at least one of a human and a system. The necessity of performance qualification corresponding to the procedure ID 531 specifies whether or not the procedure specified by the procedure ID 531 needs a performance qualification. The necessity of performance qualification 535 corresponding to procedure ID 531 is set when the operator in charge 534 corresponding to the procedure ID 531 is a human. The standard error rate 536 corresponding to the procedure ID 531 specifies a standard error rate of an error occurring when the procedure specified by the procedure ID 531 is performed. The standard error rate 536 corresponding to the procedure ID 531 is set for each of the cases where the operator in charge 534 corresponding to the procedure ID 531 is a human and where the operator in charge 534 corresponding to the procedure ID 531 is a system. The allowed time 537 corresponding to the procedure ID 531 specifies an allowed time which is time allowed to spend until the procedure specified by the procedure ID 531 is performed. The allowed time 537 corresponding to the procedure ID 531 is set as the need arises. The work procedure information 53 shown in Fig. 4 thereby indicates a procedure which is a constituent of each work procedure. Further, the work procedure information 53 indicates an execution sequence of the plurality of procedures. Furthermore, the work procedure information 53 shown in Fig. 4 indicates whether or not each of the human and the system can perform each procedure and whether or not each procedure needs a performance qualification. Further, the work procedure information 53 shown in Fig. 4 indicates a name of each procedure, a standard error rate of an error occurring when each procedure is performed, and an allowed time which is time allowed to spend until each procedure is performed.

Hereinafter, for simple description, procedures specified by the procedure IDs 531 of "procedure 1-1", "procedure 1-2", "procedure 1-3", "procedure 1-4", "procedure 2-1", "procedure 2-2", and "procedure 2-3" will be abbreviated as "procedure 1-1", "procedure 1-2", "procedure 1-3", "procedure 1-4", "procedure 2-1", "procedure 2-2", and "procedure 2-3", respectively.

The work procedure information 54 shown in Fig. 5 includes a procedure ID 541, a name 542 and a work 543 which are corresponding to the procedure ID 541, and a workload 544 and an error rate 545 which are corresponding to the work 543. The name 542 corresponding to the procedure ID 541 specifies a name of the procedure specified by the procedure ID 541. The work 543 corresponding to the procedure ID 541 specifies a work which is a constituent of the procedure specified by the procedure ID 541. The workload 544 corresponding to the work 543 specifies a workload to be imposed on the operator who performs the work when the work specified by the work 543 is performed. The error rate 545 corresponding to the work 543 specifies an error rate of an error occurring when the work specified by the work 543 is performed. The work procedure information 54 shown in Fig. 5 thereby indicates a work which is a constituent of each procedure. Further, the work procedure information 54 shown in Fig. 5 indicates a workload to be imposed on the operator who performs each work when the work is performed and an error rate of an error occurring when each work is performed. The workload 544 is represented as "big", "medium", or "small". The error rate 545 is represented as "high", "medium", or "low".

### 3. 4 Operation Information

The operation information storage unit 24 stores therein operation information 55. The operation information 55 to be stored there is information on an operation of a plant performed by each operator. The operation information 55 is time series information. The operation information 55 is information in accordance with a state of the plant and an event occurring in the plant. The operation information 55 includes at least one kind of information selected from a group consisting of an operation content, the number of operations, a required operation time, and an operation frequency. The operation information 55 may include any information other than these kinds of information. The operation content includes start/stop of the motor, start/stop of the pump, open/close of the valve, check of the plant information, or the like.

### 3. 5 Operator Information

The operator information storage unit 25 stores therein operator information 56. The operator information 56 to be stored there is information on each operator. The operator information 56 indicates whether or not each operator is handling an operation of the plant, whether or not each operator can handle the operation of the plant when the operator is not handling the operation of the plant, and whether or not each operator has a performance qualification. The operator information 56 may indicate any information other than these kinds of information. For example, the operator information 56 may indicate a qualification, a business title, a character, an experience, or the like which each operator has.

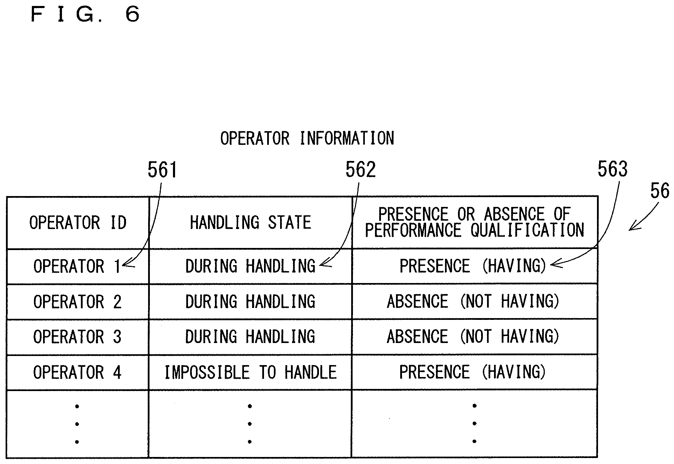

Fig. 6 is a view showing an example of operator information stored in the work assignment device in accordance with the first preferred embodiment.

The operator information 56 shown in Fig. 6 includes an operator ID 561, and a handling state 562 and presence or absence of performance qualification 563 which are corresponding to the operator ID 561. The operator ID 561 specifies an operator. The handling state 562 corresponding to the operator ID 561 indicates whether or not the operator specified by the operator ID 561 is handling the operation of the plant and whether or not the operator can handle the operation of the plant when the operator is not handling the operation of the plant. The presence or absence of performance qualification 563 corresponding to the operator ID 561 indicates whether or not the operator specified by the operator ID 561 has the performance qualification. The operator information 56 shown in Fig. 6 thereby indicates whether or not each operator is handling the operation of the plant, whether or not each operator can handle the operation of the plant when the operator is not handling the operation of the plant, and whether or not each operator has the performance qualification. The handling state 562 is represented as "during handling", "possible to handle", or "impossible to handle".

### 3. 6 Biometric Information

The biometric information storage unit 26 stores therein biometric information 57. The biometric information 57 to be stored there is biometric information of each operator. The biometric information 57 is time series information. The biometric information 57 is acquired by a contact-type or non-contact-type sensor or the like. The biometric information 57 includes at least one kind of information selected from a group consisting of a body temperature, a blood pressure, a heart rate, a respiratory rate, an electrocardiogram waveform, emotion, a stress, a line of sight, an eye movement, a blink, and an electroencephalogram (brain wave).

### 3. 7 Evaluation Information

The evaluation information storage unit 27 stores therein evaluation information 58. The evaluation information 58 to be stored there is information required to perform evaluation on each of a plurality of work assignment candidates 73 described later. In the first preferred embodiment, the evaluation information 58 indicates correction corresponding to each condition of an operator. In the first preferred embodiment, each condition of the operator refers to each degree of fatigue of the operator. Further, the correction refers to an error rate correction of the standard error rate. For this reason, the evaluation information 58 indicates the error rate correction of the standard error rate corresponding to each degree of fatigue of the operator.

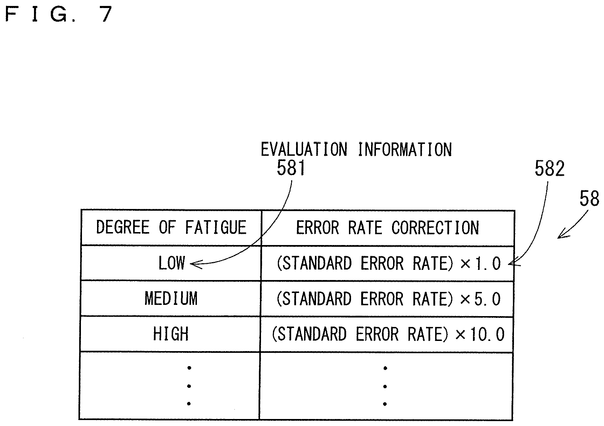

Fig. 7 is a view showing an example of evaluation information stored in the work assignment device in accordance with the first preferred embodiment.

The evaluation information 58 shown in Fig. 7 includes a degree of fatigue 581, and an error rate correction 582 corresponding to the degree of fatigue 581. The degree of fatigue 581 specifies the degree of fatigue of an operator. The error rate correction 582 corresponding to the degree of fatigue 581 specifies an error rate correction of the standard error rate corresponding to the degree of fatigue of the operator specified by the degree of fatigue 581. The evaluation information 58 shown in Fig. 7 thereby indicates an error rate correction of the standard error rate corresponding to each degree of fatigue of an operator. The error rate correction of the standard error rate includes a correction value applied to the standard error rate. By the correction value applied to the standard error rate, the standard error rate is multiplied. The degree of fatigue 581 is represented as "high", "medium", or "low".

### 3. 8 Presentation Information

The presentation information storage unit 28 stores therein presentation information 59. The presentation information 59 to be stored there is information used for determining a presentation method for presenting a work assignment in accordance with the operator condition. The presentation information 59 indicates an operator condition corresponding to each pair of a workload and an error rate, for which presentation is possible. In the first preferred embodiment, the operator condition for which the presentation is possible refers to a degree of arousal of the operator for which the presentation is possible. For this reason, the presentation information 59 indicates the degree of arousal of the operator corresponding to each pair of the workload and the error rate, for which the presentation is possible.

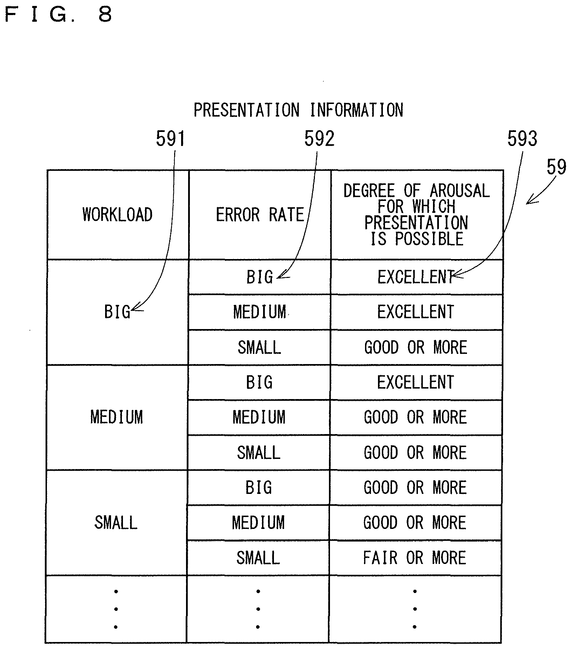

Fig. 8 is a view showing an example of presentation information stored in the work assignment device in accordance with the first preferred embodiment.

The presentation information 59 shown in Fig. 8 includes a workload 591, an error rate 592, and a degree of arousal 593 corresponding to a pair of the workload 591 and the error rate 592, for which the presentation is possible. The degree of arousal 593 for which the presentation is possible specifies a degree of arousal of an operator for which the presentation is possible. The presentation information 59 shown in Fig. 8 thereby indicates a degree of arousal of an operator corresponding to each pair of the workload and the error rate, for which the presentation is possible. The workload 591 is represented as "big", "medium", or "small". The error rate 592 is represented as "high", "medium", or "low".
4 Processing to be Performed
4. 1 Outline

The work assignment device 2 dynamically assigns an operator and a system to a work on the basis of the plant condition and the operator condition. Further, the work assignment device 2 determines a presentation method for presenting the assignment of the operator to the work, to the operator, and presents the assignment of the operator to the work, to the operator, in accordance with the determined presentation method. Presentation of the assignment of the operator to the work is performed by outputting a result of the assignment of the operator to the work, to an external output device such as a display, a speaker, or the like.

Hereinafter, it is assumed that the plants are a "plant 1" and a "plant 2", and the operators are an "operator 1", an "operator 2", and an "operator 3".

### 4. 2 Diagnosis of Plant Condition

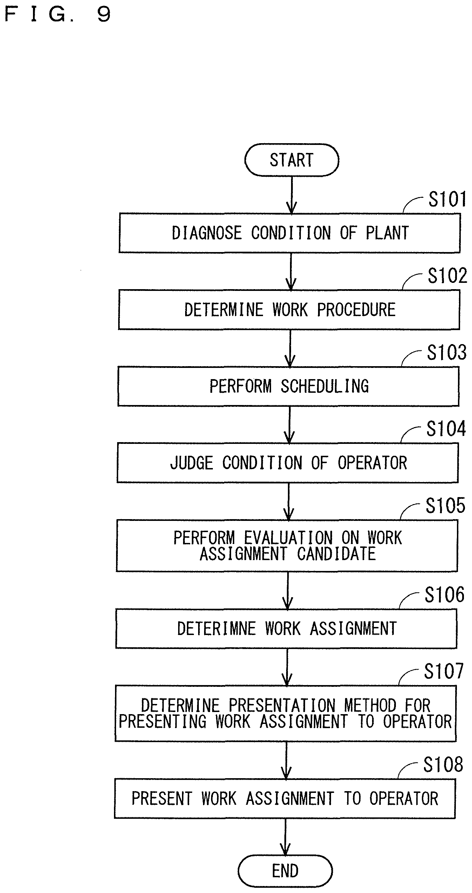

Fig. 9 is a flowchart showing a processing performed by the work assignment device in accordance with the first preferred embodiment.

The work assignment device 2 executes Steps S101 to S108 shown in Fig. 9.

In Step S1 01, the plant condition diagnostic unit 31 diagnoses a condition of the plant. At that time, the plant condition diagnostic unit 31 acquires the plant information 51 from the plant information storage unit 21 and estimates an occurring event 71 which is occurring in the plant on the basis of the acquired plant information 51. The acquired plant information 51 includes the alarm information and the plant value. The occurring event 71 which is estimated is at least one occurring event. Preferably, the plant condition diagnostic unit 31 estimates the occurring event 71 by using a knowledge base. In the knowledge base to be used, stored are data required to estimate the occurring event 71. The stored data include a relation between a cause of a trouble and a range over which the event ripples. The data may include information other than the relation between the cause of the trouble and the range over which the event ripples.

Hereinafter, it is assumed that the estimated occurring events 71 are an "event 1" and an "event 2" occurring in the "plant 1" and the "plant 2", respectively.

### 4. 3 Determination of Work Procedure

In subsequent Step S102, the work procedure determination unit 32 determines a work procedure 72. At that time, the work procedure determination unit 32 determines the work procedure 72 on the basis of the occurring event 71 which is estimated. At that time, the work procedure determination unit 32 acquires the event information 52 from the event information storage unit 22 and determines a work procedure to be performed when the estimated occurring event 71 occurs, which is indicated by the acquired event information 52, as the work procedure 72 to be determined.

In a case where the estimated occurring events 71 are the "event 1" and the "event 2" and the acquired event information 52 is the event information shown in Fig. 3, the work procedure determination unit 32 determines the "procedure 1" and the "procedure 2" to be performed when the "event 1" and the "event 2" indicated by the event information 52 occur, respectively, as the work procedure 72 to be determined.

### 4. 4 Constitution of Work Procedure Derivation Unit

By performing Steps S101 and S102, the plant condition diagnostic unit 31 and the work procedure determination unit 32 constitute a work procedure derivation unit 41 for deriving the work procedure 72 on the basis of the plant information 51.

### 4.5 Scheduling

In subsequent Step S103, the scheduling unit 33 performs scheduling. At that time, the scheduling unit 33 selects a plurality of work assignment candidates 73. Each of the plurality of work assignment candidates 73 indicates an assignment of the operator or the system to a procedure which is a constituent of the determined work procedure 72. The assignment is a feasible assignment.

The scheduling unit 33 acquires the work procedure information 53 from the work procedure information storage unit 23 and acquires the operator information 56 from the operator information storage unit 25, and selects the plurality of work assignment candidates 73 on the basis of the work procedure information 53 and the operator information 56 which are acquired.

At that time, when the work procedure information 53 indicates that a human and a system can each perform the procedure which is a constituent of the work procedure 72, the scheduling unit 33 assigns the human or the system to the procedure. Further, when the work procedure information 53 indicates that a human can perform the procedure but a system cannot perform the procedure, the scheduling unit 33 assigns the human to the procedure. Furthermore, when the work procedure information 53 indicates that a system can perform the procedure but a human cannot perform the procedure, the scheduling unit 33 assigns the system to the procedure.

Further, when the work procedure information 53 indicates that the procedure which is a constituent of the work procedure 72 needs a performance qualification, the scheduling unit 33 assigns an operator who has the performance qualification, which is indicated by the operator information 56, to the procedure and does not assign an operator who does not have the performance qualification, which is indicated by the operator information 56, to the procedure.

Furthermore, the scheduling unit 33 assigns an operator who is handling the operation of the plant or can handle the operation of the plant, which is indicated by the operator information 56, to the procedure which is a constituent of the work procedure 72 and does not assign an operator who cannot handle the operation of the plant, which is indicated by the operator information 56, to the procedure.

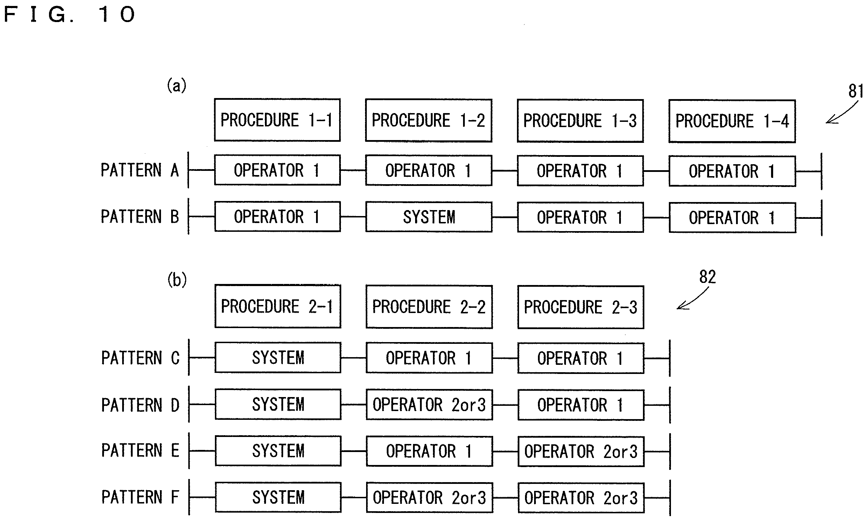

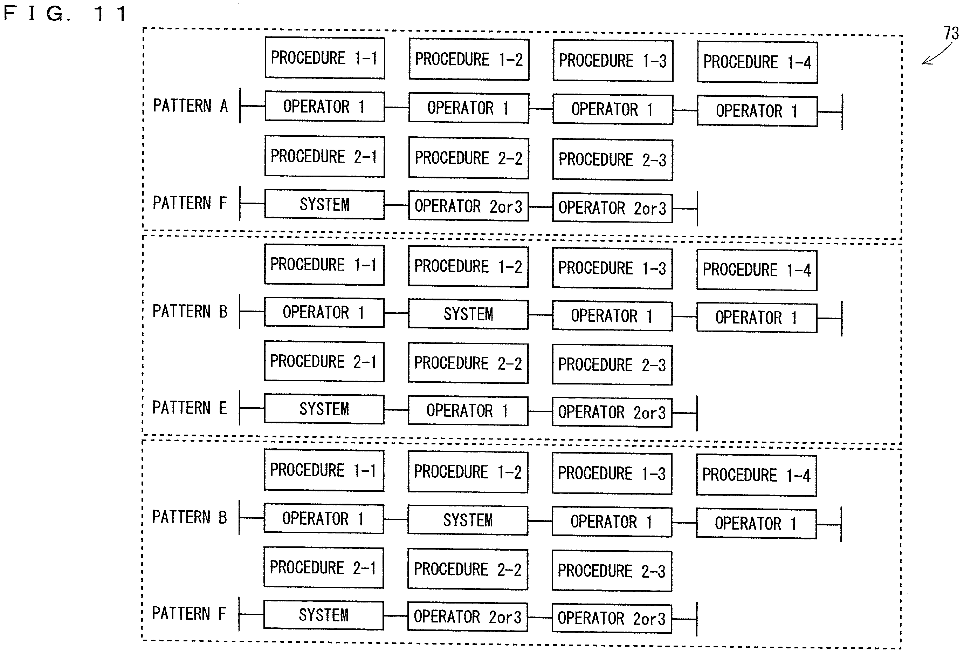

Fig. 10 is a view showing an exemplary selection of the plurality of work assignment candidates, which is performed by the work assignment device in accordance with the first preferred embodiment. Fig. 11 is a view showing an exemplary result of the selection of the plurality of work assignment candidates, which is performed by the work assignment device in accordance with the first preferred embodiment.

Hereinafter, it is assumed that time required to perform each procedure is equally five minutes.

In a case where the determined work procedure 72 includes the "procedure 1" and the "procedure 2", the acquired work procedure information 53 is the work procedure information shown in Fig. 4, and the acquired operator information 56 is the operator information shown in Fig. 6, a work assignment candidate 81 shown in Fig. 10(a) is selected for the "event 1" occurring in the "plant 1". Further, a work assignment candidate 82 shown in Fig. 10(b) is selected for the "event 2" occurring in the "plant 2". Furthermore, after the work assignment candidate 81 and the work assignment candidate 82 are selected, the plurality of work assignment candidates 73 shown in Fig. 11 are selected for the whole of the "event 1" and the "event 2".

In the case where the work assignment candidate 81 is selected for the "event 1", it can be seen from the work procedure information 53 that an operator in charge who can perform the "procedure 1-1" having a name of "check of occurrence of event 1", the "procedure 1-3" having a name of "control operation of equipment B", and the "procedure 1-4" having a name of "check of end of event 1" is a human having the performance qualification. On the other hand, it can be seen from the operator information 56 that the human who is handling the operation of the plant or can handle the operation of the plant and has the performance qualification is the "operator 1". For this reason, the "operator 1" is assigned to the "procedure 1-1", the "procedure 1-3", and the "procedure 1-4". Further, it can be seen from the work procedure information 53 that an operator in charge who can perform the "procedure 1-2" having a name of "control operation of equipment A" is a human having the performance qualification and a system. On the other hand, it can be seen from the operator information 56 that the human who is handling the operation of the plant or can handle the operation of the plant and has the performance qualification is the "operator 1". For this reason, the "operator 1" or a "system" is assigned to the "procedure 1-2". Therefore, as shown in Fig. 10(a), a "pattern A" in which the "operator 1" is assigned to the "procedure 1-1", the "procedure 1-2", the "procedure 1-3", and the "procedure 1-4" and a "pattern B" in which the "operator 1" is assigned to the "procedure 1-1", the "procedure 1-3", and the "procedure 1-4" and the "system" is assigned to the "procedure 1-2" are selected as the work assignment candidate 81.

In the case where the work assignment candidate 82 is selected for the "event 2", it can be seen from the work procedure information 53 that an operator in charge who can perform the "procedure 2-1" having a name of "check of occurrence of event 2" is a system. For this reason, the "system" is assigned to the "procedure 2-1". Further, it can be seen from the work procedure information 53 that an operator in charge who can perform the "event 2-2" having a name of "control operation of equipment C" and the "event 2-3" having a name of "check of end of event 2" is a human. On the other hand, it can be seen from the operator information 56 shown in Fig. 6 that the human who is handling the operation of the plant or can handle the operation of the plant includes the "operator 1", the "operator 2", and the "operator 3". For this reason, the "operator 1", the "operator 2", or the "operator 3" is assigned to the "event 2-2" and the "event 2-3". Therefore, as shown in Fig. 10(b), a "pattern C" in which the "system" is assigned to the "procedure 2-1" and the "operator 1" is assigned to the "procedure 2-2" and the "procedure 2-3", a "pattern D" in which the "system" is assigned to the "procedure 2-1", the "operator 2" or the "operator 3" is assigned to the "procedure 2-2", and the "operator 1" is assigned to the "procedure 2-3", a "pattern E" in which the "system" is assigned to the "procedure 2-1", the "operator 1" is assigned to the "procedure 2-2", and the "operator 2" or the "operator 3" is assigned to the "procedure 2-3", and a "pattern F" in which the "system" is assigned to the "procedure 2-1" and the "operator 2" or the "operator 3" is assigned to the "procedure 2-2" and the "procedure 2-3" are selected as the work assignment candidate 82.

In the case where the plurality of work assignment candidates 73 are selected for the whole of the "event 1" and the "event 2", combinations of the "pattern A" or the "pattern B" and the "pattern C", the "pattern D", the "pattern E", or the "pattern F" are the plurality of work assignment candidates 73. At that time, an unfeasible combination is excluded. The unfeasible combination is any combination in which the same operator performs two or more procedures at the same time. The reason why the combination in which the same operator performs two or more procedures at the same time is an unfeasible combination is that one operator cannot perform two or more procedures at the same time. For example, the combination of the "pattern A" and the "pattern C" is excluded since this combination is a combination in which the "operator 1" performs the "procedure 1-2" and the "procedure 2-2" at the same time and performs the "procedure 1-3" and the "procedure 2-3" at the same time. Similarly, the combination of the "pattern A" and the "pattern D", the combination of the "pattern A" and the "pattern E", the combination of the "pattern B" and the "pattern C", and the combination of the "pattern B" and the "pattern D" are also excluded. Therefore, as shown in Fig. 11, the combination of the "pattern A" and the "pattern F", the combination of the "pattern B" and the "pattern E", and the combination of the "pattern B" and the "pattern F" are selected as the plurality of work assignment candidates 73.

### 4. 6 Judgment of Operator Condition

In subsequent Step S 104, the operator condition judgment unit 34 judges the operator condition 74. At that time, the operator condition judgment unit 34 acquires the operation information 55 from the operation information storage unit 24 and acquires the biometric information 57 from the biometric information storage unit 26, and judges the operator condition 74 on the basis of the operation information 55 and the biometric information 57 which are acquired. The operator condition judgment unit 34 may acquire only one of the operation information 55 and the biometric information 57 and judge the operator condition 74 on the basis of only the one of the operation information 55 and the biometric information 57. The operator condition 74 to be judged includes at least one kind of information selected from a group consisting of a load status, a condition recognition power, a degree of fatigue, a degree of arousal, and a concentration power of the operator. The operator condition judgment unit 34 judges the load status of the operator on the basis of, for example, a body temperature, a blood pressure, a heart rate, a respiratory rate, a stress, the number of operations, a required operation time, an operation frequency, or the like. Alternatively, the operator condition judgment unit 34 judges the condition recognition power of the operator on the basis of a heart rate, a respiratory rate, an eye movement, an electroencephalogram (brain wave), or the like. More alternatively, the operator condition judgment unit 34 judges the degree of fatigue of the operator on the basis of the number of operations, an operation speed, an operation frequency, or the like. Alternatively, the operator condition judgment unit 34 judges the degree of arousal of the operator on the basis of a heart rate, a respiratory rate, an electroencephalogram (brain wave), a blink, or the like. More alternatively, the operator condition judgment unit 34 judges the concentration power of the operator on the basis of a heart rate, heart rate variability, respiration, or the like. Alternatively, the operator condition judgment unit 34 judges the degree of fatigue of the operator on the basis of a required operation time. Hereinafter, it is assumed that the operator condition judgment unit 34 judges the degree of fatigue of the operator on the basis of a required operation time.

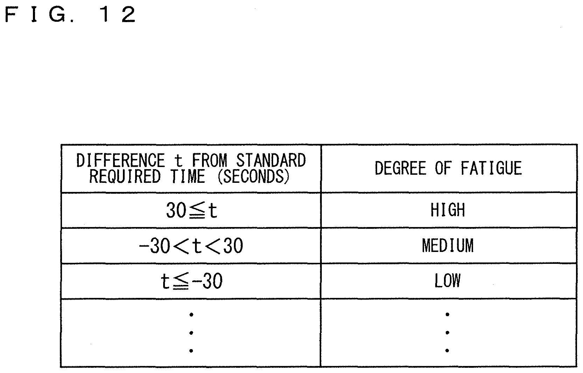

Fig. 12 is a view showing an exemplary judgment of the degree of fatigue of the operator on the basis of the required operation time, which is performed by the work assignment device in accordance with the first preferred embodiment.

The operator condition judgment unit 34 judges the degree of fatigue to be higher as the required operation time becomes longer. For example, as shown in Fig. 12, when the difference t between the required operation time and a standard required time, which is obtained by subtracting the standard required time from the required operation time, is not shorter than 30 seconds, the operator condition judgment unit 34 judges the degree of fatigue to be "high". Further, when the difference t between the required operation time and the standard required time is not longer than -30 seconds, the operator condition judgment unit 34 judges the degree of fatigue to be "low". Furthermore, when the difference t between the required operation time and the standard required time is shorter than 30 seconds and longer than -30 seconds, the operator condition judgment unit 34 judges the degree of fatigue to be "medium".

Hereinafter, it is assumed that the degree of fatigue of the "operator 1" is judged to be "high" on the basis of the required operation time of the "operator 1", the degree of fatigue of the "operator 2" is judged to be "low" on the basis of the required operation time of the "operator 2", and the degree of fatigue of the "operator 3" is judged to be "medium" on the basis of the required operation time of the "operator 3".

### 4. 7 Evaluation of Work Assignment Candidate

In subsequent Step S105, the work assignment evaluation unit 35 performs evaluation on each of the plurality of work assignment candidates 73. At that time, the work assignment evaluation unit 35 acquires the work procedure information 53 from the work procedure information storage unit 23 and acquires the evaluation information 58 from the evaluation information storage unit 27, and performs evaluation on the basis of the work procedure information 53 and the evaluation information 58 which are acquired and the judged operator condition 74. Specifically, the work assignment evaluation unit 35 performs evaluation on the basis of the standard error rate of the error occurring when the procedure which is a constituent of the work procedure 72 and indicated by the work procedure information 53 is performed. Further, the work assignment evaluation unit 35 applies the error rate correction corresponding to the degree of fatigue of the operator, which is indicated by the evaluation information 58, to the evaluation. It is thereby possible to perform the evaluation in accordance with the operator condition 74. In the first preferred embodiment, performing the evaluation is calculating an evaluation value. The evaluation value to be calculated indicates a magnitude of risk. The evaluation value becomes larger as the risk increases.

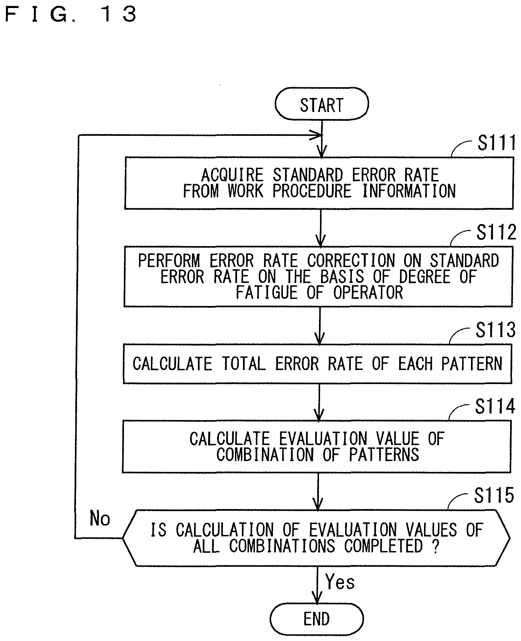

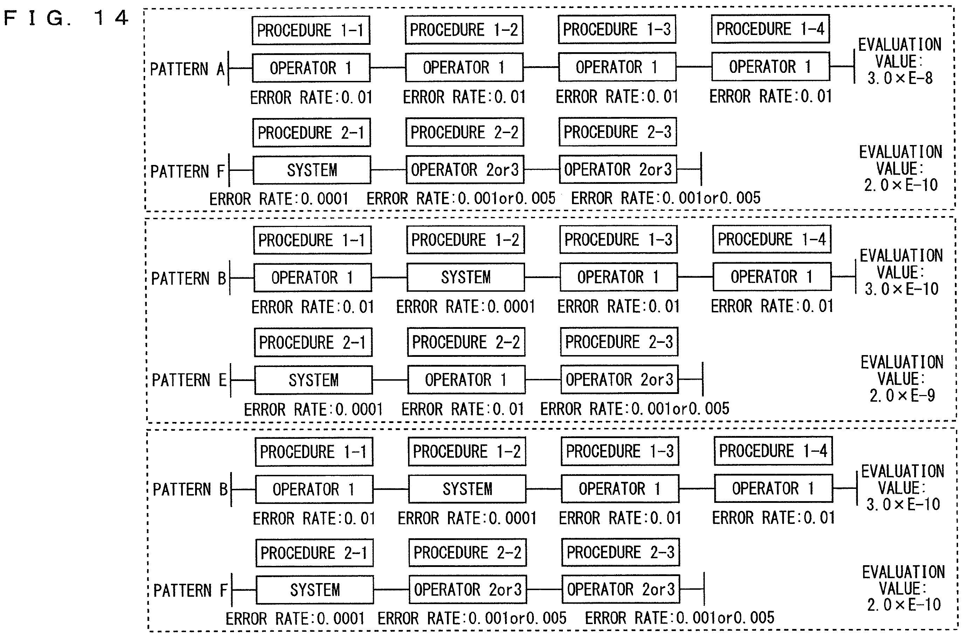

Fig. 13 is a flowchart showing an exemplary process for evaluation, which is performed by the work assignment device in accordance with the first preferred embodiment. Fig. 14 is a view showing exemplary evaluation performed by the work assignment device in accordance with the first preferred embodiment.

The work assignment evaluation unit 35 executes Steps S111 to S115 shown in Fig. 13.

In Step S111, the work assignment evaluation unit 35 acquires the standard error rate from the work procedure information 53.

In a case where the evaluation is performed on the combination of the "pattern A" and the "pattern F", the work assignment evaluation unit 35 acquires the standard error rates of "0.001", "0.001", "0.001", "0.001", "0.0001", "0.001", and "0.001" of the errors occurring when the "procedure 1-1", the "procedure 1-2", the "procedure 1-3", the "procedure 1-4", the "procedure 2-1", the "procedure 2-2", and the "procedure 2-3" which are included in the combination are performed, respectively, from the work procedure information 53.

In subsequent Step S112, the work assignment evaluation unit 35 performs the error rate correction on the acquired standard error rate on the basis of the degree of fatigue of the operator.

In the case where the evaluation is performed on the combination of the "pattern A" and the "pattern F", the work assignment evaluation unit 35 acquires the fatigue degrees of "high", "low", and "medium" of the "operator 1", the "operator 2", and the "operator 3" which are included in the combination, from the operator condition judgment unit 34. Further, the work assignment evaluation unit 35 acquires the error rate corrections corresponding to "high", "low", and "medium" which are acquired, i.e., "(the standard error rate)×10.0", "(the standard error rate)×1.0", and "(the standard error rate)×5.0", respectively, from the evaluation information 58. Furthermore, as shown in Fig. 14, the work assignment evaluation unit 35 acquires an error rate, i.e., "0.01", of the "procedure 1-1", the "procedure 1-2", the "procedure 1-3", and the "procedure 1-4" by performing the error rate correction, i.e., "(the standard error rate)×10.0", corresponding to "high" which is the degree of fatigue of the "operator 1" on the standard error rate, i.e., "0.001", of the error occurring in the case of performing the "procedure 1-1", the "procedure 1-2", the "procedure 1-3", and the "procedure 1-4" to which the "operator 1" is assigned. Further, the work assignment evaluation unit 35 acquires an error rate, i.e., "0.001", of the "procedure 2-2" and the "procedure 2-3" by performing the error rate correction, i.e., "(the standard error rate)×1.0", corresponding to "low" which is the degree of fatigue of the "operator 2" on the standard error rate, i.e., "0.001", of the error occurring in the case of performing the "procedure 2-2" and the "procedure 2-3" to which the "operator 2" is assigned. Furthermore, the work assignment evaluation unit 35 acquires an error rate, i.e., "0.005", of the "procedure 2-2" and the "procedure 2-3" by performing the error rate correction, i.e., "(the standard error rate)×5.0", corresponding to "medium" which is the degree of fatigue of the "operator 3" on the standard error rate, i.e., "0.001", of the error occurring in the case of performing the "procedure 2-2" and the "procedure 2-3" to which the "operator 3" is assigned.

In subsequent Step S113, the work assignment evaluation unit 35 calculates a total error rate of each pattern.

In the case where the evaluation is performed on the combination of the "pattern A" and the "pattern F", the work assignment evaluation unit 35 calculates the total error rate of the "pattern A", i.e., "1.0×E-8", by multiplying the error rates, i.e., "0.01", "0.01", "0.01 ", and "0.01 ", of the "procedure 1-1", the "procedure 1-2", the "procedure 1-3", and the "procedure 1-4", respectively, included in the "pattern A" by one another. Herein, "E-8" means the minus eighth power of 10. As to the total error rate of the "pattern F", there is a difference between the total error rate calculated from the error rate acquired by performing the error rate correction of "(the standard error rate)×1.0" corresponding to "low" which is the degree of fatigue of the "operator 2" and that calculated from the error rate acquired by performing the error rate correction of "(the standard error rate)×5.0" corresponding to "medium" which is the degree of fatigue of the "operator 3". The total error rate of the "pattern F" calculated from the former error rate is, however, lower than the total error rate of the "pattern F" calculated from the latter error rate. For this reason, the work assignment evaluation unit 35 adopts the total error rate of the "pattern F" calculated from the former error rate. Therefore, the work assignment evaluation unit 35 calculates the total error rate of the "pattern F", i.e., "1.0×E-10", by multiplying the error rates, i.e., "0.0001", "0.001", and "0.001", of the "procedure 2-1", the "procedure 2-2", and the "procedure 2-3", respectively, included in the "pattern F" by one another.

In subsequent Step S114, the work assignment evaluation unit 35 calculates an evaluation value of the combination of the patterns.

In the case where the evaluation is performed on the combination of the "pattern A" and the "pattern F", as shown in Fig. 14, the work assignment evaluation unit 35 calculates an evaluation value of the "pattern A", i.e., "3.0×E-8" by multiplying the total error rate of the "pattern A", i.e., "1.0×E-8" by a coefficient of "3" which is given to the degree of influence of the "event 1", i.e., "big". Further, the work assignment evaluation unit 35 calculates an evaluation value of the "pattern F", i.e., "2.0×E-10" by multiplying the total error rate of the "pattern F", i.e., "1.0×E-10" by a coefficient of "2" which is given to the degree of influence of the "event 2", i.e., "medium". Furthermore, the work assignment evaluation unit 35 calculates an evaluation value of the combination of the "pattern A" and the "pattern F", i.e., "3.0×E-8+2.0×E-10" by adding the evaluation value of the "pattern A", i.e., "3.0×E-8", to the evaluation value of the "pattern F", i.e., "2.0×E-10". In the case where the evaluation is performed on the combination of the "pattern B" and the "pattern E", the work assignment evaluation unit 35 similarly calculates an evaluation value of the combination, i.e., "3.0×E-10+2.0×E-9". Further, in the case where the evaluation is performed on the combination of the "pattern B" and the "pattern F", the work assignment evaluation unit 35 similarly calculates an evaluation value of the combination, i.e., "3.0×E-10+2.0×E-10".

In Step S115, the work assignment evaluation unit 35 judges whether or not calculation of the respective evaluation values of all the combinations is completed. When the calculation of the respective evaluation values of all the combinations is not completed, the work assignment evaluation unit 35 executes Steps S111 to S115 again. When the calculation of the respective evaluation values of all the combinations is completed, the work assignment evaluation unit 35 finishes the process for evaluation.

### 4.8 Determination of Work Assignment

With reference back to Fig. 9, the description continues.

In subsequent Step S106, the work assignment determination unit 36 determines the work assignment. At that time, the work assignment determination unit 36 determines the work assignment 76 from the plurality of selected work assignment candidates 73 on the basis of the result 75 of the evaluation which is performed. The work assignment determination unit 36 determines the work assignment candidate having the highest evaluation result as the work assignment 76. In the first preferred embodiment, determining the work assignment 76 on the basis of the evaluation result 75 is determining the work assignment 76 on the basis of whether the evaluation value is large or small. Further, determining the work assignment 76 on the basis of whether the evaluation value is large or small is determining the work assignment candidate having an evaluation value indicating the magnitude of the lowest risk, as the work assignment 76. In a case where the evaluation value becomes larger as the risk increases, the evaluation value indicating the magnitude of the lowest risk is the smallest evaluation value.

In the case where the evaluation value of the combination of the "pattern A" and the "pattern F" is "3.0×E-8+2.0×E-10", the evaluation value of the combination of the "pattern B" and the "pattern E" is "3.0×E-10+2.0×E-9", and the evaluation value of the combination of the "pattern B" and the "pattern F" is "3.0×E-10+2.0×E-10", the work assignment determination unit 36 determines the combination of the "pattern B" and the "pattern F" having the smallest evaluation value, i.e., "3.0×E-10+2.0×E-10", as the work assignment 76.

### 4. 9 Determination of Presentation Method

In subsequent Step S107, the work assignment presentation method determination unit 37 determines a presentation method 77 for presenting the determined work assignment 76 to the operator. At that time, the work assignment presentation method determination unit 37 acquires the work procedure information 53 and the work procedure information 54 from the work procedure information storage unit 23, and determines the presentation method 77 on the basis of the work procedure information 53 and the work procedure information 54 which are acquired, the judged operator condition 74, and the determined work assignment 76. It is thereby possible to dynamically determine the presentation method 77 in accordance with the operator condition 74. The presentation method 77 includes at least one kind of information selected from a group consisting of a presentation content, a presentation means, and a presentation timing. Hereinafter, it is assumed that the presentation method 77 includes the presentation content, the presentation means, and the presentation timing. The work assignment presentation method determination unit 37 specifies the workload imposed on the operator performing the work when the work is performed and the error rate of the error occurring when the work is performed, which are indicated by the work procedure information 54. Further, the work assignment presentation method determination unit 37 specifies the operator condition corresponding to the pair of the workload and the error rate which are specified, for which the presentation is possible, which is indicated by the presentation information 59. Furthermore, the work assignment presentation method determination unit 37 determines a timing when the operator condition 74 is the specified operator condition, for which the presentation is possible, as the presentation timing.

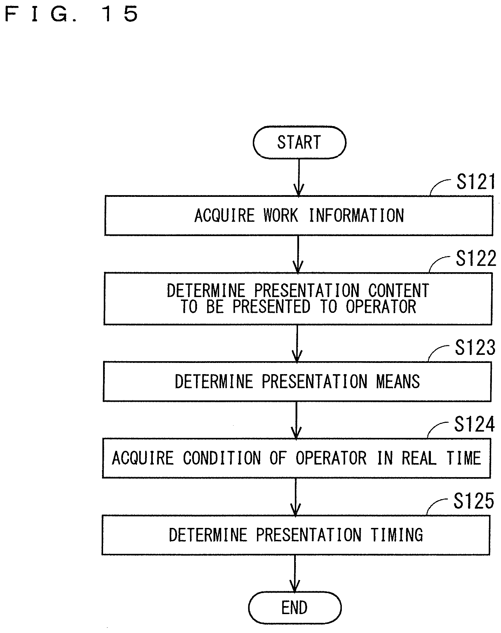

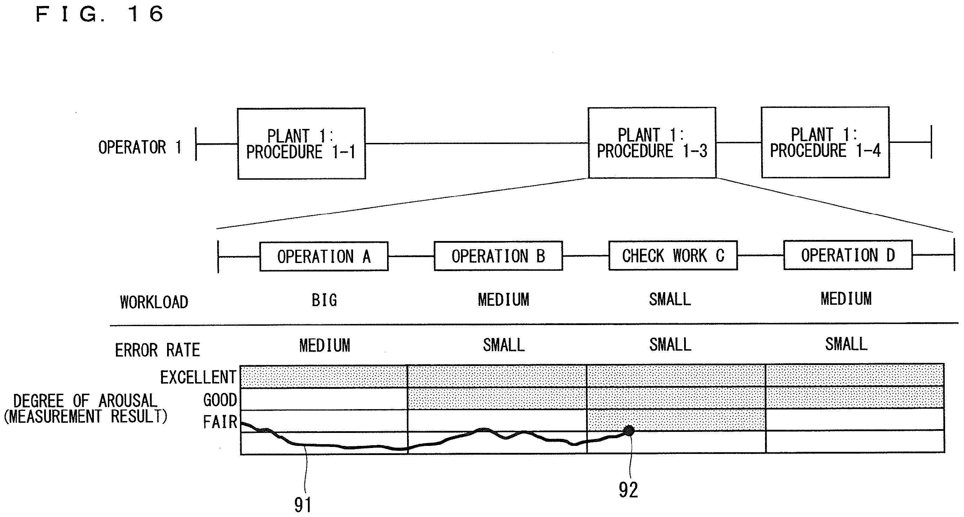

Fig. 15 is a flowchart showing an exemplary process of determining the presentation method, which is performed by the work assignment device in accordance with the first preferred embodiment. Fig. 16 is a view showing exemplary determination of the presentation method, which is performed by the work assignment device in accordance with the first preferred embodiment.

The work assignment presentation method determination unit 37 executes Steps S121 to S125 shown in Fig. 15.

In Step S121, the work assignment presentation method determination unit 37 acquires work information from the work procedure information storage unit 23 and the work assignment determination unit 36. The acquired work information includes a work content performed before or to be performed after, a time until the next work, a plant to be operated, or the like.

In subsequent Step S122, the work assignment presentation method determination unit 37 determines a presentation content to be presented to the operator, from the acquired work information and the operator condition 74.

In a case of determining a presentation method for presenting the assignment of the "operator 1" to the "procedure 1-4" which is included in the combination of the "pattern A" and the "pattern F", to the "operator 1", the work assignment presentation method determination unit 37 determines to present a work content which should be performed in the "procedure 1-4" to the "operator 1".

In subsequent Step S123, the work assignment presentation method determination unit 37 determines a presentation means from the acquired work information and the operator condition 74.

In the case of determining the presentation method for presenting the assignment of the "operator 1" to the "procedure 1-4" which is included in the combination of the "pattern A" and the "pattern F", to the "operator 1", the work assignment presentation method determination unit 37 determines to present the work content to the "operator 1" by displaying the work content that should be performed, for example, on a terminal which the "operator 1" operates.

In subsequent Step S124, the work assignment presentation method determination unit 37 acquires the operator condition 74 in real time. Hereinafter, it is assumed that the operator condition 74 which is acquired in real time includes a degree of arousal of the operator. For example, the degree of arousal of the operator is high when a line of sight moves quickly and frequently and a blink cycle is stable, and is low when the line of sight moves slowly and blinking is slow.

In subsequent Step S125, the work assignment presentation method determination unit 37 determines an optimum presentation timing from the work information and the operator condition 74 which are acquired.

In the case of determining the presentation method for presenting the assignment of the "operator 1" to the "procedure 1-4" which is included in the combination of the "pattern A" and the "pattern F", to the "operator 1", the work assignment presentation method determination unit 37 can grasp that the "procedure 1-3" performed before the "procedure 1-4" consists of an "operation A", an "operation B", a "check work C", and an "operation D", from the work procedure information 53 and the work procedure information 54. Further, the work assignment presentation method determination unit 37 can grasp the workload and the error rate corresponding to each work of the "operation A", the "operation B", the "check work C", and the "operation D", from the work procedure information 54. Furthermore, from the presentation information 59, the work assignment presentation method determination unit 37 can grasp the degree of arousal corresponding to the pair of the workload and the error rate, for which the presentation is possible. From the first line of the presentation information 59, for example, the work assignment presentation method determination unit 37 can grasp the degree of arousal of "excellent" corresponding to the workload of "big" and the error rate of "high", for which the presentation is possible. For this reason, as shown in Fig. 16, from the work procedure information 53, the work procedure information 54, and the presentation information 59, the work assignment presentation method determination unit 37 can grasp the degree of arousal corresponding to each work of the "operation A", the "operation B", the "check work C", and the "operation D", for which the presentation is possible. In Fig. 16, the degree of arousal corresponding to each work of the "operation A", the "operation B", the "check work C", and the "operation D", for which the presentation is possible, is represented by being filled with gray. Further, in Fig. 16, the degree of arousal of the operator which is acquired in real time is represented by a curve 91. In

Fig. 16, at the point in time represented by a point 92, the workload becomes "small", the error rate becomes "low", and the degree of arousal of the operator represented by the curve 91 becomes "fair" which is a degree of arousal represented by being filled with gray, for which the presentation is possible. For this reason, the point in time represented by the point 92 is determined as the optimum presentation timing.

### 4. 10 Presentation of Work Assignment

With reference back to Fig. 9, the description continues.

In subsequent Step S108, the work assignment presentation unit 38 presents the determined work assignment 76 to the operator by using the determined presentation method 77.

The work assignment presentation unit 38 presents the work assignment 76 to the operator by outputting the content of the work assignment 76 on the output device. The output device is a display, a speaker, or the like.

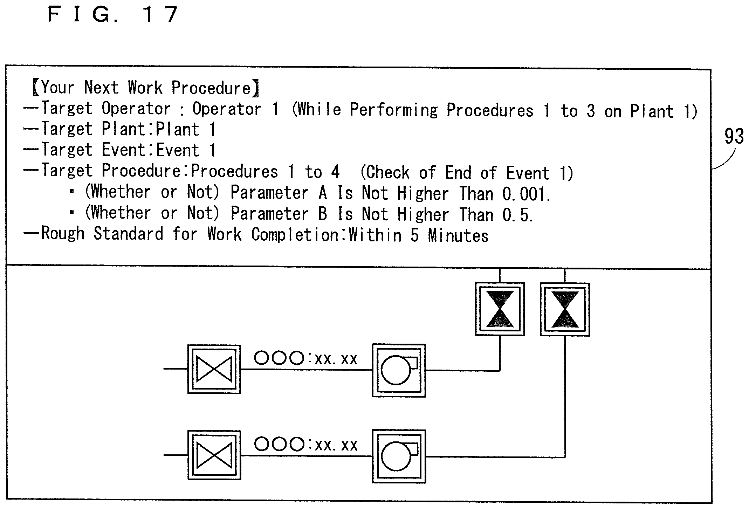

Fig. 17 is a view showing a work content that should be performed next by the operator, which is displayed on an operation screen of the plant operated by the operator, by the work assignment device in accordance with the first preferred embodiment.

Fig. 17 shows the work content that should be performed next by the "operator 1", which is displayed on an operation screen 93 of the "plant 1" operated by the "operator 1".

### 5 Variations

In the first preferred embodiment, the operator condition 74 includes the degree of fatigue of the operator, and on the basis of the degree of fatigue of the operator, the error rate correction is performed on the standard error rate. The operator condition 74, however, may include an operator condition other than the degree of fatigue of the operator, and the error rate correction may be performed on the standard error rate on the basis of the operator condition. For example, the operator condition 74 may include the load status, the condition recognition power, the degree of arousal, the concentration power, or the like, and the error rate correction may be performed on the standard error rate on the basis of the load status, the condition recognition power, the degree of arousal, or the concentration power. The operator condition 74 may include a plurality of operator conditions, and in comprehensive consideration of the plurality of operator conditions, the error rate correction may be performed on the standard error rate on the basis of the plurality of operator conditions. For example, the error rate correction may be performed on the standard error rate on the basis of a simple sum or a weighted sum of a plurality of values representing the plurality of operator conditions, respectively. In a case where the error rate correction is performed on the standard error rate on the basis of the weighted sum, weighting may be dynamically changed. Correction may be performed by any method other than the error rate correction on the standard error rate.

In the first preferred embodiment, the operator condition 74 judged by the operator condition judgment unit 34 is a current operator condition. The operator condition 74 judged by the operator condition judgment unit 34, however, may be a future operator condition. In the case where the operator condition 74 judged by the operator condition judgment unit 34 is a future operator condition, the operator condition judgment unit 34 predicts the future operator condition in order to judge the future operator condition.

In the first preferred embodiment, the work assignment evaluation unit 35 calculates the evaluation value without consideration of an error caused by taking over the work. The work assignment evaluation unit 35, however, may calculate the evaluation value in consideration of an error caused by taking over the work. In a case where a new work is performed, a case where the plant on which a work is performed is changed, or the like case, the work assignment evaluation unit 35 may calculate the evaluation value by adding an error rate of an error caused by taking over the work to a basic error rate.

In the first preferred embodiment, the evaluation value indicates the magnitude of the risk. The evaluation value, however, may indicate the degree of any item other than the magnitude of the risk. For example, the evaluation value may indicate the level of cost, the length of required time, the priority level, or the like. The evaluation value may comprehensively indicate the degrees of the plurality of items. For example, the evaluation value may be a simple sum or a weighted sum of a plurality of values representing the degrees of the plurality of items, respectively. In a case where the evaluation value is the weighted sum of a plurality of values, weighting may be dynamically changed.

In the first preferred embodiment, it is assumed that the procedures each have the same required time to perform and immediately after one procedure is finished, the next procedure is started. More complicated procedure, however, may be performed. For example, the procedures may have different required times to perform. Further, only if the procedure is performed within the allowed time, with a time interval after one procedure is finished, the next procedure may be started.

### 6 Effects

According to the first preferred embodiment, the work procedure 72 is derived on the basis of the plant information 51 on the plant, and the assignment of the operator to the procedure which is a constituent of the derived work procedure 72 is determined. It is thereby possible to dynamically perform the assignment of the operator in accordance with the plant condition.

Further, according to the first preferred embodiment, the operator condition 74 is judged on the basis of the operation information 55 on the operation of the plant by each operator and the biometric information 57 of each operator, the evaluation is performed on each of the plurality of work assignment candidates 73 on the basis of the judged operator condition 74, and the work assignment 76 is determined on the basis of the evaluation result 75. It is thereby possible to dynamically perform the assignment of the operator in accordance with the operator condition 74.

With these processes, it is possible to correctly deal with the event occurring in the plant in a short time.

Further, according to the first preferred embodiment, the operator condition 74 is judged on the basis of the operation information 55 on the operation of the plant by each operator and the biometric information 57 of each operator, and the presentation method 77 for presenting the work assignment to the operator on the basis of the judged operator condition 74. For this reason, the presentation in accordance with the operator condition 74 can be performed. It is thereby possible to perform handling of the occurring event 71 occurring in the plant, suitable for the operator condition 74.

In the background art, there have been cases where the condition of a human, such as the degree of fatigue or the like, is used for the user interface control. There has not been a case, however, where the operator condition such as the workload, the condition recognition, or the like of the operator is acquired and the acquired operator condition is used for dynamic assignment of the operator. Further, in the background art, since the assignment is not presented to the operator in sufficient consideration of the condition of the operator taking over the work in assigning the work to the operator, the operator cannot correctly recognize the situation and cannot smoothly take over the work. According to the first preferred embodiment, it is possible to suppress occurrence of such problems.

Further, in the present disclosure, the preferred embodiment may be changed or omitted as appropriate, without departing from the scope of the disclosure.

While the present disclosure has been shown and described in detail, the foregoing description is in all aspects illustrative and not restrictive. It is therefore understood that numerous modifications and variations can be devised.

### Explanation of Reference Signs

2 work assignment device, 31 plant condition diagnostic unit, 32 work procedure determination unit, 33 scheduling unit, 34 operator condition judgment unit, 35 work assignment evaluation unit, 36 work assignment determination unit, 37 work assignment presentation method determination unit, 38 work assignment presentation unit, 41 work procedure derivation unit, 51 plant information, 52 event information, 53 work procedure information, 54 work procedure information, 55 operation information, 56 operator information, 57 biometric information, 58 evaluation information, 59 presentation information

## Claims

1. A work assignment device comprising:
a work procedure derivation unit for deriving a work procedure on the basis of plant information on a plant;
a scheduling unit for selecting a plurality of work assignment candidates each indicating an assignment of an operator to a procedure which is a constituent of the work procedure:
a work assignment evaluation unit for performing evaluation on each of the plurality of work assignment candidates; and
a work assignment determination unit for determining a work assignment from the plurality of work assignment candidates on the basis of a result of the evaluation.

2. The work assignment device according to claim 1, wherein
the work procedure derivation unit comprises
a plant condition diagnostic unit for estimating an occurring event which is occurring in the plant on the basis of the plant information; and
a work procedure determination unit for determining the work procedure on the basis of the occurring event.

3. The work assignment device according to claim 2, wherein
the plant condition diagnostic unit estimates the occurring event by using a knowledge base which stores therein data necessary to estimate the occurring event.

4. The work assignment device according to claim 3, wherein
the data include a relation between a cause of a trouble and a range over which an event ripples.

5. The work assignment device according to any one of claims 2 to 4, wherein the work procedure determination unit determines a work procedure which is indicated by event information indicating a work procedure to be performed when each event occurs, and which is to be performed when the occurring event occurs, as a work procedure to be determined.

6. The work assignment device according to any one of claims 1 to 5, wherein the plant information includes at least one kind of information selected from a group consisting of alarm information on an alarm to be set off by a plant equipment which is a constituent of the plant and a plant value outputted from the plant equipment.

7. The work assignment device according to any one of claims 1 to 6, wherein the scheduling unit selects the plurality of work assignment candidates on the basis of work procedure information on each procedure and operator information on each operator.

8. The work assignment device according to claim 7, wherein
the work procedure information indicates whether or not each of a human and a system can perform each procedure, and
the scheduling unit assigns the human or the system to the procedure when the work procedure information indicates that the human and the system can perform the procedure,
assigns the human to the procedure when the work procedure information indicates that the human can perform the procedure but the system cannot perform the procedure, and
assigns the system to the procedure when the work procedure information indicates that the system can perform the procedure but the human cannot perform the procedure.

9. The work assignment device according to claim 7 or 8, wherein
the work procedure information indicates whether or not each procedure needs a performance qualification,
the operator information indicates whether or not each operator has the performance qualification, and
when the work procedure information indicates that the procedure needs the performance qualification, the scheduling unit assigns an operator having the performance qualification, who is indicated by the operator information, to the procedure and does not assign another operator not having the performance qualification, who is indicated by the operator information, to the procedure.

10. The work assignment device according to any one of claims 7 to 9, wherein the operator information indicates whether or not each operator is handling an operation of the plant and when the operator is not handling the operation of the plant, the operator information indicates whether or not the operator can handle the operation of the plant, and
the scheduling unit assigns an operator who is handling the operation of the plant or can handle the operation of the plant, who is indicated by the operator information, to the procedure, and does not assign another operator who cannot handle the operation of the plant, who is indicated by the operator information, to the procedure.

11. The work assignment device according to any one of claims 1 to 10, wherein
the work assignment evaluation unit performs the evaluation on the basis of an operator condition.

12. The work assignment device according to claim 11, wherein
the operator condition includes at least one kind of information selected from a group consisting of a load status, a condition recognition power, a degree of fatigue, a degree of arousal, a concentration power of the operator.

13. The work assignment device according to claim 11 or 12, further comprising:
an operator condition judgment unit for judging the operator condition on the basis of at least one of operation information indicating information regarding an operation of the plant and biometric information of the operator.

14. The work assignment device according to claim 13, wherein
the operation information includes at least one kind of information selected from a group consisting of an operation content, the number of operations, a required operation time, and an operation frequency.

15. The work assignment device according to claim 13 or 14, wherein
the biometric information includes at least one kind of information selected from a group consisting of a body temperature, a blood pressure, a heart rate, a respiratory rate, an electrocardiogram waveform, emotion, a stress, a line of sight, an eye movement, a blink, and an electroencephalogram (brain wave).

16. The work assignment device according to any one of claims 13 to 15, wherein
the operation information includes a required operation time,
the operator condition includes a degree of fatigue of the operator, and
the operator condition judgment unit makes the degree of fatigue higher as the required operation time becomes longer.

17. The work assignment device according to any one of claims 11 to 16, wherein
the work assignment evaluation unit performs the evaluation on the basis of a standard error rate of an error occurring when the procedure is performed, which is indicated by the work procedure information indicating a standard error rate of an error occurring when each procedure is performed.

18. The work assignment device according to any one of claims 11 to 17, wherein
the work assignment evaluation unit performs the evaluation on the basis of the operator condition and evaluation information required to perform the evaluation.

19. The work assignment device according to claim 18, wherein
the evaluation information indicates correction corresponding to each condition of the operator, and
the work assignment evaluation unit applies correction corresponding to the condition of the operator, which is indicated by the evaluation information, to the evaluation.

20. The work assignment device according to any one of claims 1 to 19, wherein
performing the evaluation is calculating an evaluation value, and
determining the work assignment on the basis of a result of the evaluation is determining the work assignment on the basis of whether the evaluation value is large or small.

21. The work assignment device according to claim 20, wherein
the evaluation value indicates a magnitude of risk, and
determining the work assignment on the basis of whether the evaluation value is large or small is determining a work assignment candidate having an evaluation value indicating the magnitude of the lowest risk, as the work assignment.

22. The work assignment device according to any one of claims 1 to 21, further comprising:
a work assignment presentation method determination unit for determining a presentation method for presenting the work assignment to the operator; and
a work assignment presentation unit for presenting the work assignment to the operator by using the presentation method.

23. The work assignment device according to claim 22, wherein
the work assignment presentation method determination unit determines the presentation method on the basis of the operator condition.

24. The work assignment device according to claim 22 or 23, wherein
the presentation method includes at least one kind of information selected from a group consisting of a presentation content, a presentation means, and a presentation timing.

25. The work assignment device according to any one of claims 22 to 24, wherein
the presentation method includes a presentation timing, and
on the basis of a work which is a constituent of each procedure, a workload to be imposed on an operator who performs each work when the work is performed, work procedure information indicating an error rate of an error occurring when the work is performed, and presentation information indicating an operator condition corresponding to each pair of the workload and the error rate, for which the presentation is possible, the work assignment presentation method determination unit specifies an operator condition corresponding to the procedure, for which the presentation is possible, and determines a timing when the operator condition is the specified operator condition, for which the presentation is possible, as the presentation timing.
